# EUROPEAN PATENT APPLICATION

(11) **EP 4 641 789 A1**
(43) Date of publication of application: **29.10.2025**
(21) Application number: 25170315.3
(22) Date of filing: 14.04.2025
(51) Int. Cl.: H01M 50/209, H01M 50/242, H01M 50/284, H01M 50/291, H01M 50/298, H01M 10/42, H01M 50/204, H01M 50/244

(54) **BATTERY PACK**

(30) Priority: 26.04.2024 CN 202420895606 U; 20.09.2024 WO PCT/CN2024/122177
(71) Applicant: Eve Energy Co., Ltd., Huizhou, Guangdong 516006 (CN)
(72) Inventor: YE, Ziling, HUIZHOU, 516006 (CN)
(74) Representative: Regimbeau

(57) **Abstract**

Provided is a battery pack. The battery pack includes a battery box, a cell assembly (100), and an expansion beam (200). The cell assembly (100) is disposed in the battery box. The expansion beam (200) is fixed in the battery box and includes a first side wall (210) and a second side wall (220) opposite to each other. The first side wall (210) is bonded to the cell assembly (100), significantly enhancing the reliability of the connection between the expansion beam (200) and the cell assembly (100).

## Description

### TECHNICAL FIELD

The present application relates to the field of battery technology and, in particular, to a battery pack.

### BACKGROUND

In the related art, an expansion beam is usually disposed in a battery box. Two ends of the expansion beam are welded to two inner side walls of the battery box respectively. Moreover, a side wall of the expansion beam abuts against an end portion of a cell assembly. When the cell assembly expands during charging and discharging, the expansion beam applies an acting force opposite to the expansion direction to the cell assembly so as to make the cell assembly stay clamped and avoid the deformation of the battery box.

The expansion beam and the cell assembly are connected only through extrusion force and friction force, resulting in a relatively poor reliability of the connection between the expansion beam and the cell assembly. When the battery pack collides or vibrates, the expansion beam is likely to get disconnected from the cell assembly so that the expansion beam cannot apply the preceding acting force to the cell assembly.

### SUMMARY

An embodiment of the present application provides a battery pack. The battery pack includes a battery box, a cell assembly, and an expansion beam.

The cell assembly is disposed in the battery box.

The expansion beam is fixed in the battery box. The expansion beam includes a first side wall and a second side wall opposite to each other. The first side wall is bonded to the cell assembly.

According to the battery pack provided in the present application, the expansion beam includes the first side wall and the second side wall opposite to each other, where the first side wall is bonded to the cell assembly. When the battery pack collides or vibrates, the probability of the expansion beam getting disconnected from the cell assembly is relatively low, significantly enhancing the reliability of the connection between the expansion beam and the cell assembly.

### BRIEF DESCRIPTION OF DRAWINGS

FIG. 1 is a sectional view of an expansion beam and a cell assembly according to an embodiment of the present application.
FIG. 2 is structural view one of the expansion beam according to the embodiment of the present application.
FIG. 3 is a structural view of the expansion beam, the cell assembly, and a battery management system (BMS) according to the embodiment of the present application.
FIG. 4 is structural view two of the expansion beam according to the embodiment of the present application.

### Reference list

- 100: cell assembly
- 200: expansion beam
- 210: first side wall
- 211: recess
- 212: adhesive injection opening
- 220: second side wall
- 221: mounting hole
- 230: weight reduction cavity
- 240: stiffener

- 300: adhesive
- 400: BMS
- 500: connection line
- 600: connection bar
- 510: first protrusion portion
- 511: first insertion hole
- 520: second mounting member
- 530: second protrusion portion
- 531: second insertion hole
- 540: first mounting member
- 700: fixed member

### DETAILED DESCRIPTION

This embodiment provides a battery pack to improve the reliability of the connection between an expansion beam and a cell assembly.

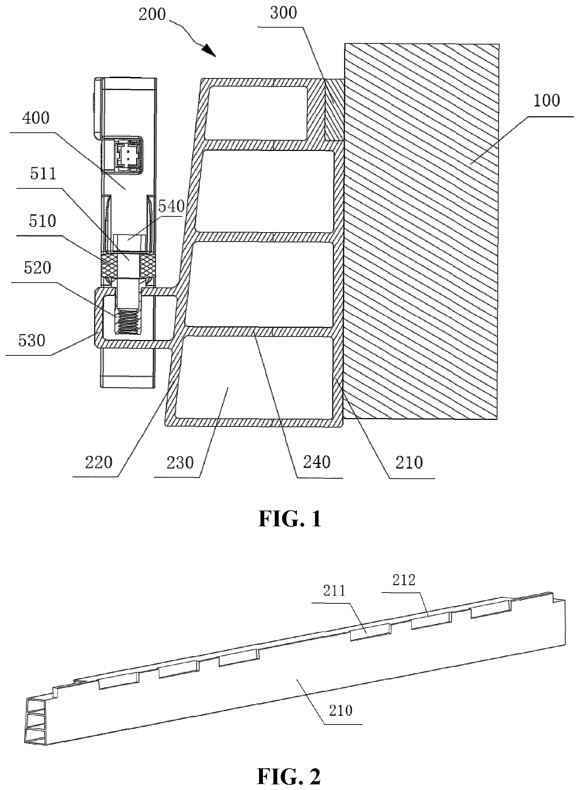

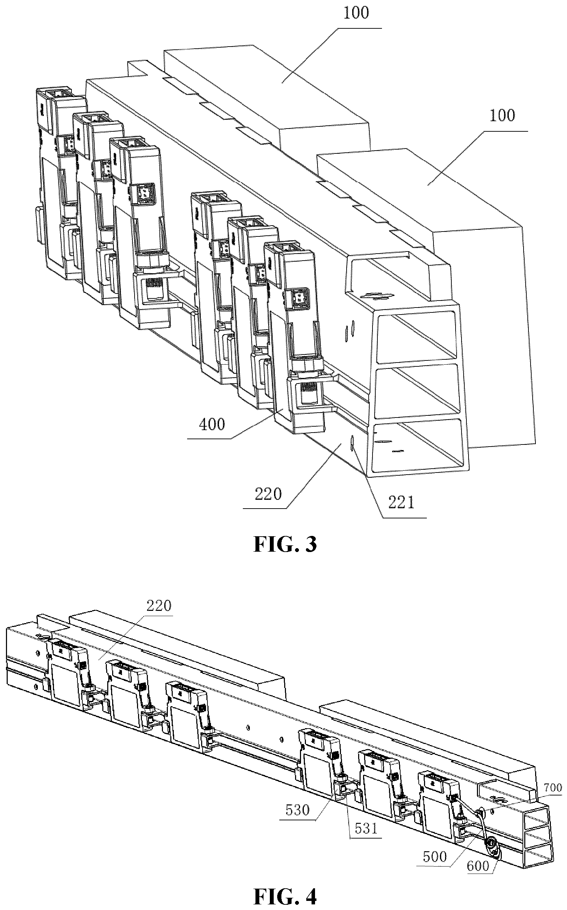

As shown in FIGS. 1 to 3, the battery pack includes a battery box, a cell assembly 100, and an expansion beam 200. The cell assembly 100 is disposed in the battery box. Two ends of the expansion beam 200 are fixedly connected to two inner side walls of the battery box respectively. Moreover/alternatively, the bottom of the expansion beam 200 is fixedly connected to the inner bottom wall of the battery box. The expansion beam 200 includes a first side wall 210 and a second side wall 220 opposite to each other. The first side wall 210 is bonded to the cell assembly 100.

Based on the preceding design, the first side wall 210 of the expansion beam 200 is bonded to the cell assembly 100. When the battery pack collides or vibrates, the probability of the expansion beam 200 getting disconnected from the cell assembly 100 is relatively low, significantly enhancing the reliability of the connection between the expansion beam 200 and the cell assembly 100.

The cell assembly 100 may be clamped between the expansion beam 200 and an inner wall of the battery box or may be clamped between two expansion beams 200, which is determined according to actual applications.

The existing expansion beams are roughly divided into two structures, expansion beams with rectangular longitudinal sections and expansion beams with L-shaped longitudinal sections. When an expansion beam with a rectangular longitudinal section applies an acting force opposite to the expansion direction to a cell assembly, concentrated stress can be generated at weld seams at two ends of the expansion beam and might even cause the weld seams to be cracked; therefore, the expansion beam is generally thick so as to improve the anti-expansion ability of the expansion beam. The horizontal section of an expansion beam with an L-shaped longitudinal section can support the vertical section; therefore, the anti-expansion ability of the expansion beam is relatively sound; however, the expansion beam needs to occupy a large space in a battery box, not beneficial to improving the energy density of a battery pack.

As shown in FIGS. 1 to 3, the second side wall 220 is disposed obliquely. An included angle formed between the second side wall 220 and a bottom surface of the expansion beam 200 is less than an included angle formed between the second side wall 220 and a top surface of the expansion beam 200. That is, the second side wall 220 is oblique toward the cell assembly 100. When the cell assembly 100 expands, the second side wall 220 can support the expansion beam 200, thereby improving the anti-expansion ability of the expansion beam 200. Moreover, such a structure arrangement also avoids occupying excessive space in the battery box, contributing to improving the energy density of the battery pack.

The included angle formed between the second side wall 220 and the bottom surface of the expansion beam 200 ranges from 80° to 85°. For example, the angle may be 80°, 83°, or 85°. By way of example, the angle is 85°, enabling the expansion beam 200 to have a relatively sound anti-expansion ability and avoiding occupying excessive space in the battery box.

As shown in FIGS. 1 to 3, recesses 211 each with an opening facing the cell assembly 100 are disposed on the first side wall 210 and filled with adhesive 300. The first side wall 210 is bonded to the cell assembly 100 through the adhesive 300 to reduce the total width after the expansion beam 200 is bonded to the cell assembly 100, achieving the effect of saving the internal space of the battery box.

As shown in FIGS. 1 to 3, a plurality of recesses 211 are provided. For example, two, four, six, or seven recesses 211 may be provided. The plurality of recesses 211 are spaced apart in the extension direction of the expansion beam 200. Each recess 211 is filled with the adhesive 300 to increase the number of bonding points between the first side wall 210 and the cell assembly 100 and improve the reliability of the bonding between the expansion beam 200 and the cell assembly 100. Additionally, when one expansion beam 200 is bonded to two or more cell assemblies 100, the plurality of recesses 211 may correspond to different cell assemblies 100. In this embodiment, six recesses 211 are provided, and one expansion beam 200 is bonded to two cell assemblies 100. Each cell assembly 100 corresponds to three recesses 211. That is, each cell assembly 100 has three bonding points bonded to the first side wall 210, improving the reliability of the bonding between each cell assembly 100 and the expansion beam 200, making full use of the internal space of the battery box, and having the effect of improving the energy density of the battery pack. Of course, in other embodiments, one expansion beam 200 may be bonded to three or more cell assemblies 100, and the number of recesses 211 corresponding to different cell assemblies 100 may be the same or different, which is determined according to applications.

As shown in FIGS. 1 to 3, an adhesive injection opening 212 is disposed on a recess wall of a recess 211. The adhesive 300 is able to be injected into the recess 211 through the adhesive injection opening 212. The adhesive injection opening 212 may be located on the top surface of the expansion beam 200 or on a side surface of the first side wall 210. In this embodiment, the adhesive injection opening 212 is located on the top surface of the expansion beam 200 to facilitate adhesive injection.

In this embodiment, each recess 211 is provided with an adhesive injection opening 212. In other embodiments, it may be that part of the recesses 211 are each provided with an adhesive injection opening 212 and that the remaining recesses 211 are provided with no adhesive injection opening 212. Alternatively, some of the recesses 211 may be each provided with an adhesive injection opening 212, and all the recesses 211 may or may not communicate with each other. It may also be that all the recesses 211 are provided with no adhesive injection opening 212, which is determined according to actual assembly requirements.

As shown in FIGS. 1 to 3, a weight reduction cavity 230 is disposed between the first side wall 210 and the second side wall 220 to reduce the weight of the expansion beam 200, thereby reducing the weight of the battery pack and improving the energy density of the battery pack.

As shown in FIGS. 1 to 3, the expansion beam 200 further includes at least one stiffener 240 disposed in the weight reduction cavity 230. Two ends of each of the at least one stiffener 240 are fixedly connected to the first side wall 210 and the second side wall 220 respectively. With such a structure arrangement, the anti-expansion ability of the expansion beam 200 can be improved without occupying additional space in the battery box. In this embodiment, three stiffeners 240 are disposed in the weight reduction cavity 230. In other embodiment, one, two, five, or more stiffeners 240 may be provided, which is determined according to the height dimension of the expansion beam 200.

The battery pack further includes a connection bar (600), a detection element (for example, a temperature sensor or a voltage sensor), a connection line (500), and a BMS. The connection bar 600 is an element with the conductive function, such as a copper bar. The electrical connection between a plurality of cells in the cell assembly 100 is implemented through the connection bar 600. The detection element is disposed on the connection bar 600 or a cell and configured to detect a real-time state, such as temperature or voltage, of the cell. The connection line 500 is connected to the detection element and the BMS 400 separately to transmit a data signal detected by the detection element to the BMS 400, implementing the real-time monitoring of a battery module.

The connection bar 600 and/or the connection line 500 is fixed on the second side wall 220, saving a bracket for fixing the connection bar 600 and/or the connection line 500 in the battery box and achieving the effect of weight reduction and cost reduction.

As shown in FIGS. 1 to 4, a mounting hole 221 is disposed on the second side wall 220. When the connection bar 600 is fixed on the second side wall 220, a fixed member 700 such as a pin or a bolt may be inserted through the connection bar 600 and fixed in the mounting hole 221. When the connection line 500 is fixed on the second side wall 220, the fixed member 700 such as a pin or a bolt may be fixed in the mounting hole 221, and the connection line 500 is fixed on the fixed member 700 through winding or bonding. Of course, when the height space of the battery box is sufficient, the mounting hole 221 may also be disposed on the top surface of the expansion beam 200. That is, the connection bar 600 and/or the connection wire 500 may be fixed on the top surface of the expansion beam 200 through the fixed member 700, which is determined according to the internal space of the battery box.

The battery pack further includes a mounting structure. The BMS 400 is mounted on the second side wall 220 through the mounting structure, saving a bracket for fixing the BMS 400 in the battery box and resulting in better integrity inside the battery box. Moreover, the BMS 400, the connection bar 600, and the connection line 500 in this embodiment are all mounted on the expansion beam 200, not only improving the assembly efficiency of the battery pack but also improving the assembly accuracy between the BMS 400 and the connection line 500 and the assembly accuracy between the connection bar 600 and the connection line 500. Of course, when the height space of the battery box is sufficient, the BMS 400 may also be disposed on the top surface of the expansion beam 200. In this embodiment, the BMS 400 is disposed on the second side wall 220 to avoid mutual interference between the BMS 400 and the cell assembly 100 in mounting.

As shown in FIGS. 1 to 4, the mounting structure includes a first mounting member 540 and a second mounting member 520. The first mounting member 540 is disposed on the BMS 400. The second mounting member 520 is disposed on the second side wall 220. The first mounting member 540 is detachably connected to the second mounting member 520 to mount the BMS 400 on the expansion beam 200.

As shown in FIGS. 1 to 4, the mounting structure further includes a first protrusion portion 510 and a second protrusion portion 530. The first protrusion portion 510 protrudes from an outer wall of the BMS 400. The first mounting member 540 is disposed on the first protrusion portion 510. The second protrusion portion 530 protrudes from the second side wall 220. The second mounting member 520 is disposed on the second protrusion portion 530 to facilitate the arrangement of the first mounting member 540 and the second mounting member 520.

As shown in FIGS. 1 to 4, a first insertion hole 511 is disposed on the first protrusion portion 510. The first mounting member 540 is a bolt and is inserted into the first insertion hole 511. A second insertion hole 531 is disposed on the second protrusion portion 530. The second mounting member 520 is inserted into the second insertion hole 531 and is a pull rivet nut in threaded engagement with the bolt. When the BMS 400 and the expansion beam 200 are assembled, the bolt is screwed in the pull rivet nut.

In an embodiment, the second mounting member 520 is a slot disposed on the second protrusion portion 530, and the first mounting member 540 is an insertion block disposed on the first protrusion portion 510. The insertion block is detachably inserted into the slot. Of course, in other embodiments, the first mounting member 540 and the second mounting member 520 may be other structures that are detachably connected to each other and are not listed here.

As shown in FIGS. 1 to 4, each of the left and right sides of the BMS 400 is provided with one mounting structure to improve the reliability of the connection between the BMS 400 and the expansion beam 200. Of course, each of the left and right sides of the BMS 400 may also be provided with two or more mounting structures. The number of mounting structures may be determined according to the dimension of the BMS 400. Alternatively, each of the upper and lower sides of the BMS 400 may be provided with one or more mounting structures, which is determined according to the internal space distribution of the battery box.

In this embodiment, the expansion beam 200 is an aluminum extrusion profile. The aluminum extrusion process is a relatively conventional production process in the field, which contributes to reducing the production cost.

The battery pack provided in this embodiment is suitable for a traditional battery pack structure (that is, a cell assembly 100 is clamped between two end plates to form a battery module, and the battery module is mounted in a battery box) and also for an integrated battery structure (a cell-to-pack (CTP) structure) in which a cell assembly 100 is directly disposed in the battery box.

## Claims

1. A battery pack, comprising:
a battery box;
a cell assembly (100) disposed in the battery box; and
an expansion beam (200) fixed in the battery box, wherein the expansion beam (200) comprises a first side wall (210) and a second side wall (220) opposite to each other, and the first side wall (210) is bonded to the cell assembly (100).

2. The battery pack according to claim 1, wherein the second side wall (220) is disposed obliquely, and an included angle formed between the second side wall (220) and a bottom surface of the expansion beam (200) is less than an included angle formed between the second side wall (220) and a top surface of the expansion beam (200).

3. The battery pack according to claim 2, wherein the included angle formed between the second side wall (220) and the bottom surface of the expansion beam (200) ranges from 80° to 85°.

4. The battery pack according to any one of claims 1 to 3, wherein recesses (211) each with an opening facing the cell assembly (100) are disposed on the first side wall (210) and configured to be filled with adhesive (300).

5. The battery pack according to claim 4, wherein an adhesive injection opening (212) is disposed on a recess wall of one recess (211) of the recesses (211), and the adhesive (300) is able to be injected into the one recess (211) through the adhesive injection opening (212).

6. The battery pack according to any one of claims 1 to 3, further comprising a connection bar (600) and a connection line (500), wherein at least one of the connection bar (600) and the connection line (500) is fixed on the second side wall (220), or at least one of the connection bar (600) and the connection line (500) is fixed on the top surface of the expansion beam (200).

7. The battery pack according to claim 6, further comprising a fixed member (700), wherein a mounting hole (221) is disposed on the second side wall (220) or the top surface of the expansion beam (200), the fixed member (700) is fixed in the mounting hole (221), and at least one of the connection bar (600) and the connection line (500) is disposed on the fixed member (700).

8. The battery pack according to any one of claims 1 to 3, further comprising a battery management system, BMS, (400) and a mounting structure, wherein the BMS (400) is mounted on the second side wall (220) or the top surface of the expansion beam (200) through the mounting structure.

9. The battery pack according to claim 8, wherein the mounting structure comprises a first mounting member (540) and a second mounting member (520), the first mounting member (540) is disposed on the BMS (400), the second mounting member (520) is disposed on the second side wall (220) or the top surface of the expansion beam (200), and the first mounting member (540) is detachably connected to the second mounting member (520).

10. The battery pack according to claim 9, wherein the mounting structure further comprises a first protrusion portion (510) and a second protrusion portion (530), the first protrusion portion (510) protrudes from an outer wall of the BMS (400), the first mounting member (540) is disposed on the first protrusion portion (510), the second protrusion portion (530) protrudes from the second side wall (220) or a top of the expansion beam (200), and the second mounting member (520) is disposed on the second protrusion portion (530).

11. The battery pack according to claim 10, wherein a first insertion hole (511) is disposed on the first protrusion portion (510), the first mounting member (540) is a bolt and is inserted into the first insertion hole (511), a second insertion hole (531) is disposed on the second protrusion portion (530), and the second mounting member (520) is inserted into the second insertion hole (531) and is a pull rivet nut in threaded engagement with the bolt.

12. The battery pack according to any one of claims 1 to 3, wherein a weight reduction cavity (230) is disposed between the first side wall (210) and the second side wall (220).

13. The battery pack according to claim 12, wherein the expansion beam (200) further comprises at least one stiffener (240) disposed in the weight reduction cavity (230), and two ends of each of the at least one stiffener (240) are fixedly connected to the first side wall (210) and the second side wall (220) respectively.
